# EUROPÄISCHE PATENTSCHRIFT

(11) **EP 4 103 968 B1**
(45) Veröffentlichungstag und Bekanntmachung des Hinweises auf die Patenterteilung: **04.06.2025**
(21) Anmeldenummer: 21705460.0
(22) Anmeldetag: 10.02.2021
(51) Int. Cl.: G01S 17/931, B60R 19/48, G01S 13/931, B60R 11/00

(54) **HALTERUNG FÜR EINEN SENSOR AN EINER FAHRZEUGSTRUKTUR UND FAHRZEUG MIT EINER SOLCHEN HALTERUNG**
MOUNTING FOR A SENSOR ON A VEHICLE STRUCTURE, AND VEHICLE COMPRISING A MOUNTING OF THIS TYPE
MONTAGE D'UN CAPTEUR SUR UNE STRUCTURE DE VÉHICULE, ET VÉHICULE COMPRENANT UN MONTAGE DE CE TYPE

(30) Priorität: 11.02.2020 DE 102020201712
(43) Veröffentlichungstag der Anmeldung: 21.12.2022
(73) Patentinhaber: Volkswagen AG, 38440 Wolfsburg (DE)
(72) Erfinder: BRIEST, Mathias, 39646 Oebisfelde (DE)
(86) Internationale Anmeldenummer: PCT/EP2021/053258
(87) Internationale Veröffentlichungsnummer: WO 2021/160704

(56) Entgegenhaltungen:
- DE-A1- 102017 009 055
- DE-A1- 102017 009 057
- DE-B3- 102018 205 849

## Beschreibung

Die Erfindung betrifft eine Halterung für einen Sensor an einer Fahrzeugstruktur und ein Fahrzeug mit einer solchen Halterung.

Sensoren kommen zu verschiedensten Einsatzzwecken an Fahrzeugen zum Einsatz. Insbesondere können sie für eine Umgebungserfassung vorgesehen sein und beispielsweise zum Erfassen von Umgebungsinformationen und insbesondere Abstandsinformationen des Fahrzeugs zu umgebenden Objekten. Ein Beispiel für derartige Sensoren sind Radarsensoren und genauer gesagt Mid-Range-Radarsensoren, wie sie z.B. bei Personenkraftwagen oder Lastkraftwagen zum Einsatz kommen. Diese können dazu eingerichtet sein, beispielsweise die in einer Vorwärts-Fahrrichtung vorausliegende Umgebung zu erfassen, insbesondere um eine Nähe zu darin befindlichen Hindernissen oder allgemeinen Objekten festzustellen. Beispielsweise können derartige Sensoren dazu verwendet werden, um sicherheitsrelevante Fahrerassistenzsysteme wie z.B. einen Notbremsassistenten zu aktivieren.

Insbesondere Sensoren zur Umgebungserfassung sollen üblicherweise möglichst nah an einer Außenkontur bzw. im Bereich der Außenhaut eines Fahrzeugs positioniert werden. Dort sind sie jedoch anfällig für von außen einwirkende Kollisionskräfte und/oder stellen für den Kollisionsfall relevante Komponenten dar. Beispielsweise können sie dann auch als Störkonturen bei einer Kollision mit einem Fußgänger wirken und potentiell dessen Gesundheit gefährden.

Hinsichtlich des letzteren Gesichtspunkts existieren Lösungen, um einen Sensor über Deformationselemente oder dergleichen zu lagern, welche im Kollisionsfall nachgeben und zusätzliche Energie absorbieren können und/oder die eine wirksame Störkontur des Sensors aufgrund der entsprechenden Deformations- und somit Ausweichbewegung reduzieren können.

Nachteilig ist, dass die Sensoren bei einer auftretenden Deformation ihrer Halterungen und/oder hiermit verbundener Deformationselemente nicht mehr voll einsatzfähig sein können. Beispielsweise kann sich dann ihre Position im Fahrzeug dauerhaft ändern, sodass hiervon ermittelte Signale nicht mehr sinnvoll auswertbar sind. Insbesondere kann sich das Erfassungsfeld oder aber auch eine per Einmessen kalibrierte Position und/oder ein Koordinatensystem des Sensors relativ zum Fahrzeug durch die entsprechende dauerhafte Positionsänderung ändern, ohne dass dies durch eine Auswertesoftware erkennbar und/oder kompensierbar ist. Die Sensoren müssen dann kostenintensiv ausgetauscht und/oder neu eingemessen werden.

Aus der DE 10 2018 205 849 B3 ist ein Kamera-Arm eines kamerabasierten Spiegelersatz-Systems für ein Kraftfahrzeug bekannt, das ein erstes Strukturelement zur Verbindung des Kamera-Arms mit einem Kraftfahrzeug und ein zweites Strukturelement aufweist, welches zumindest eine Kamera aufweist. Weiter weist der Kamera-Arm ein volumenveränderliches Fluidgefäß auf, welches das erste Strukturelement und das zweite Strukturelement direkt oder über Vermittlungselemente miteinander verbindet. Schließlich ist mindestens ein Rückstellelement vorgesehen, welches das erste Strukturelement und das zweite Strukturelement direkt oder über Vermittlungselemente miteinander verbindet und das zweite Strukturelement in Richtung des ersten Strukturelements zeigt, wobei das zweite Strukturelement relativ zum ersten Strukturelement bewegbar ist, indem die in dem Fluidgefäß befindliche Fluidmenge verändert wird.

Aus der DE 10 2017 009 057 A1 ist eine Anordnung eines eine sensoraktive Fläche aufweisenden Sensors an einem oder hinter einem Außenanbauteil eines Fahrzeugs bekannt, mit einer Sensorführung, mit welcher der Sensor mit einem ersten Strukturelement des Fahrzeugs schwenkbeweglich in Fahrzeuglängsrichtung verbunden ist. Weiter ist ein Abstandsmittel vorgesehen, mit welchem die Bewegung des Sensors in Fahrzeuglängsrichtung auf einen der Gebrauchsstellung des Sensors entsprechenden maximalen Abstand zu einem gegenüber dem ersten Strukturelement in Richtung des Fahrzeugsinnenraums versetzten zweiten Strukturelement des Fahrzeugs beschränkt ist. Schließlich ist ein Rückstellelement vorgesehen, welches ausgebildet ist, den Sensor aufgrund einer durch Kollision in einem Niedriggeschwindigkeitsbereich erzeugten äußeren Krafteinwirkung in rückwärtige Richtung verschoben ist, zurück in die Gebrauchsstellung zu schieben.

Aus der DE 10 2017 009 055 A1 ist eine gattungsgemäße Halterung für einen Sensor an einer Fahrzeugstruktur bekannt.

Es besteht somit ein Bedarf dafür, das Anbringen von Sensoren an bzw. in einer Fahrzeugstruktur insbesondere hinsichtlich Kollisionen zu verbessern.

Diese Aufgabe wird mit den Gegenständen der beigefügten unabhängigen Ansprüche gelöst. Vorteilhafte Weiterbildungen sind in den abhängigen Ansprüchen angegeben. Es versteht sich, dass sämtliche der vorstehenden Erläuterungen und Merkmale auch bei der vorliegenden Lösung vorgesehen sein bzw. auf diese zutreffen können, sofern nicht anders angegeben oder ersichtlich.

Erfindungsgemäß wurde erkannt, dass bisherige Lösungen mit deformierbaren Strukturen nicht immer eine ausreichend steife Anbindung des Sensors an die Fahrzeugstruktur und/oder nur schwer vorherzusehbare Ausweichbewegungen im Kollisionsfall ermöglichen. Letzteres kann bedeuten, dass trotz entsprechender Ausweichbewegungen dennoch Verletzungsrisiken für Kollisionspartner geschaffen werden. Auch wird hier das Risiko erhöht, dass eine Position des Sensors innerhalb der Fahrzeugstruktur dauerhaft derart verändert wird, dass die anschließend erfassten Sensorsignale nicht mehr sinnvoll auswertbar sind.

Es wird daher eine Halterung für einen Sensor an einer Fahrzeugstruktur vorgeschlagen, mit der definierte Ausweichbewegungen und insbesondere maßgeblich lineare Bewegungen (vorzugsweise entlang nur einer definierten Bewegungsachse) des Sensors ermöglicht werden. Dann kann der Sensor definiert einrücken, was Verletzungsrisiken mindert. Es ist bevorzugt, dass der Sensor trotz seiner zwischenzeitlich veränderten Position nach wie vor für einen weiteren Betrieb verwendet werden kann oder dass zumindest eine Wiederherstellung der ursprünglichen Position oder Einbaulage aufwandsarm möglich ist. Auch hierfür ist ein definiertes Einrücken jeweils vorteilhaft.

Insbesondere wird vorgeschlagen, ein Rückstellelement vorzusehen, das den Sensor in eine Ausgangsstellung vorspannen bzw. in diese drängen kann. Beispielsweise kann der Sensor im Kollisionsfall einrücken, kann aber dabei das Rückstellelement komprimieren und durch dieses (z.B. nach einer Entlastung der von außen einwirkenden Kräfte) wieder in die Ausgangsstellung bewegt werden. Auf diese Weise wird eine ausreichende Ausweichbewegung und somit eine Reduzierung des Verletzungsrisikos im Kollisionsfall ermöglicht, gleichzeitig aber die Wahrscheinlichkeit erhöht, dass der Sensor anschließend weiter betrieben werden kann, da er seine Position im Fahrzeug (die Ausgangsstellung) beibehält.

Bei der Ausgangsstellung kann es sich um eine bevorzugte Arbeitsstellung (oder auch Messstellung) und/oder um eine allgemein bevorzugte Position des Sensors im kollisionsfreien Fahrzeug handeln. Insbesondere kann der Sensor in Bezug auf die Ausgangsstellung kalibriert sein. Die Kalibrierung kann ermöglichen, dass Messwerte des Sensors (insbesondere Abstandsmesswerte) bei Einnahme der Ausgangsstellung mit hoher Genauigkeit in ein gewünschtes Koordinatensystem transformierbar sind, z.B. in ein übergeordnetes Fahrzeugkoordinatensystem.

Zusätzlich oder alternativ kann es sich bei der Ausgangsstellung um eine Stellung handeln, in der das Rückstellelement vergleichsweise wenige, minimale oder auch keine Rückstellkräfte erzeugt. Wie nachstehend erläutert, können die Rückstellkräfte aber spätestens bei einer Auslenkung des Sensors aus der Ausgangsstellung erzeugt werden und dann auch nach Maßgabe der Auslenkung zunehmen.

Ferner zusätzlich oder alternativ kann der Sensor in der Ausgangsstellung entlang einer nachstehend erläuterten Bewegungsachse betrachtet maximal weit vorne und/oder maximal nah zu einer Fahrzeugaußenseite oder der Umgebung positioniert sein. Anders ausgedrückt kann er entlang der Bewegungsachse in eine nach außen gerichtete Richtung maximal ausgelenkt sein.

Der Sensor kann aus der Ausgangsstellung unter einer äußeren Krafteinwirkung verlagert werden, insbesondere entgegen einer Fahrtrichtung und/oder weiter nach innen in das Fahrzeug hinein. Dies kann bis zur Einnahme einer (maximalen) Einrückstellung erfolgen, in der der Sensor maximal weit gegenüber der Ausgangsstellung eingerückt ist. In dieser Einrückstellung kann der Sensor (und können auch gemeinsam hiermit bewegbare Komponenten, wie die nachstehend erwähnte zweite Teilanordnung) vor weiteren äußeren Einwirkungen geschützt sein.

Die Rückstellkräfte können dabei derart bemessen sein, dass der Sensor auch im Fall sogenannter Bagatellcrashs, wie sie z.B. mit dem sogenannten Pendeltest gemäß ECE-R42 simuliert werden, entsprechende Ausweich- und Rückstellbewegungen bereitstellen kann. Bei dem genannten Pendeltest werden große Massen bei Geschwindigkeiten von wenigen km/h gegen die Fahrzeugfront bewegt, um z.B. Kollisionen bei Einparkvorgängen oder dergleichen zu simulieren.

Die Erfindung ist auch dahingehend vorteilhaft, als dass der Sensor zunächst relativ nah an einer Außenhülle des Fahrzeugs positioniert werden kann. Dies ist insbesondere bei Sensoren zur Umfelderfassung vorteilhaft, teilweise aber auch aus Designgründen gewünscht. Beispielsweise kann bei Radarsensoren eine Position nahezu oder im Bereich der Außenhaut eines Fahrzeugs mit kleineren bereitzustellenden Öffnungen in der Außenhaut einhergehen, als wenn der Sensor weiter innenliegend positioniert wäre. Eine solche vordere Positionierung wird erfindungsgemäß ermöglicht, da aufgrund der definierten Verlagerbarkeit und/oder der bevorzugten Rückstellmöglichkeit ein ausreichender Bewegungsspielraum für den Sensor im Crashfall bereitgestellt ist.

Insbesondere wird eine Halterung für einen Sensor an einer Fahrzeugstruktur oder, anders ausgedrückt, zum Halten eines Sensors an einer Fahrzeugstruktur vorgeschlagen, mit allen in Anspruch 1 aufgeführten technischen Merkmalen, unter anderem mit:
- einer ersten Teilanordnung (oder Teilhalterung), die an der Fahrzeugstruktur befestigbar ist;
- einer zweiten Teilanordnung (oder Teilhalterung), an der der Sensor befestigbar ist;
- wenigstens einem Rückstellelement;
wobei die erste und zweite Teilanordnung relativ zueinander beweglich sind und das Rückstellelement dazu eingerichtet ist, nach Maßgabe der Relativbewegung Rückstellkräfte auf die zweite Teilanordnung auszuüben, um diese in eine Ausgangsstellung zu drängen.

Die erste und zweite Teilanordnung können jeweils einteilig oder aber mehrteilig ausgebildet sein. Insbesondere kann es sich bei zumindest einer der ersten und zweiten Teilanordnung um eine mehrteilige Baugruppe handeln, wobei die einzelnen Bauteile dieser Baugruppe vorzugsweise aneinander befestigt und/oder relativ zueinander unbeweglich sind. Die erste und/oder die zweite Teilanordnung können zumindest teilweise aus einem Kunststoffmaterial gefertigt sein. Die Fahrzeugstruktur kann hingegen bevorzugt metallisch sein. Insbesondere kann es sich um einen Stoßfängerquerträger handeln und/oder allgemein um eine nahe einer Fahrzeugfront positionierte Struktur.

Allgemein kann die Halterung derart an der Fahrzeugstruktur angebracht sein, dass der Sensor in einer in (Vorwärts-)Fahrtrichtung betrachtet weiter vorgelagerten Position gegenüber der Fahrzeugstruktur gehalten bzw. gelagert werden kann. Zusätzlich oder alternativ kann die Halterung dazu eingerichtet sein, den Sensor nahe an bzw. unmittelbar hinter oder aber in einem Abstand von weniger als 20 cm hinter einem Außenbauteil und/oder einer Außenhaut des Fahrzeugs zu positionieren. Hierbei kann es sich z.B. um ein Bauteil der Außenkarosserie und/oder ein Verkleidungsbauteil handeln, beispielsweise um ein Kühlerschutzgitter (Lüftungsgitter) oder einen Stoßfänger.

Der Sensor kann ein Radarsensor sein, insbesondere ein vorstehend erwähnter Mid-Range-Radarsensor. Es kann sich aber auch um einen anderen Sensor, insbesondere zur FahrzeugUmfelderfassung, handeln.

Mit Ausnahme der Relativbewegung kann die Halterung allgemein starr sein. Somit kann der Sensor in einem kollisionsfreien Fall definiert und lagepräzise an bzw. innerhalb des Fahrzeugs gehalten werden.

Im Kollisionsfall (d.h. bei von außen einwirkenden Kräften) kann aber über die Relativbeweglichkeit eine definierte Einrück- bzw. Ausweichsbewegung des Sensors innerhalb von und/oder relativ zu dem Fahrzeug ermöglicht werden. Insbesondere kann der Sensor dann in Vorwärts-Fahrtrichtung betrachtet einrücken bzw. entgegen dieser Richtung bewegbar sein. Vorzugsweise kann er dann gegenüber der Ausgangsstellung, in der er von der Fahrzeugstruktur beispielsweise in (Vorwärts-)Fahrtrichtung absteht, auf die Fahrzeugstruktur zubewegt werden bzw. einen Abstand hierzu verringern. Dies kann auch soweit erfolgen, dass der Sensor in Überdeckung mit der Fahrzeugstruktur gebracht wird und/oder gegenüber einer (erneut in (Vorwärts-)Fahrtrichtung betrachtet) Vorderkante der Fahrzeugstruktur weiter innenliegend positioniert ist.

Wie nachstehend noch erläutert, kann insbesondere aufgrund bestimmter Ausgestaltungen der Teilanordnungen dabei eine Bewegung entlang definierter Bewegungs- und/oder Verlagerungs- und/oder Verschiebungsachsen erfolgen. Insbesondere kann eine einaxiale Relativbewegung der Teilanordnungen zueinander und somit des Sensors relativ zur Fahrzeugstruktur ermöglicht werden.

Mittels der Rückstellkräfte kann eine gegenüber dem Kollisionsfall entgegengesetzte Bewegung erfolgen. Diese kann also erneut wiederum geradlinig und/oder einaxial erfolgen. Weiter kann bevorzugt der Abstand zur Fahrzeugstruktur vergrößert werden, insbesondere derart, dass der Sensor weiter in die (Vorwärts-)Fahrtrichtung gerückt wird bzw. näher zu einer Außenhaut des Fahrzeugs.

Das Rückstellelement ist vorzugsweise elastisch deformierbar. Es kann in der Ausgangsstellung undeformiert oder nur gering deformiert sein und z.B. nach Maßgabe der Relativbewegung eine zunehmende Deformation erfahren, nach deren Maßgabe Rückstellkräfte erzeugt werden. Aufgrund dessen kann selbst bei einem in der Ausgangsstellung undeformierten Rückstellelement von einem Vorspannen der zweiten Teilanordnung in die Ausgangsstellung durch das Rückstellelement gesprochen werden (da auch das undeformierte Rückstellelement sozusagen unmittelbar Rückstellkräfte erzeugt, die diese Teilanordnung in die Ausgangsstellung zurückdrängen). Optional kann aber auch vorgesehen sein, dass das Rückstellelement bereits dann Kräfte auf die zweite Teilanordnung ausübt, wenn sich dieses in der Ausgangsstellung befindet. Dann wird durch das Rückstellelement ein sicheres Halten der Teilanordnung in der Ausgangsstellung gewährleistet, beispielsweise um eine unerwünschte Positionsänderung aufgrund von Vibrationen oder dergleichen zu vermeiden.

Gemäß einer Ausführungsform kann auch vorgesehen sein, dass die zweite Teilanordnung über eine Haltestruktur(z.B. Rasthaken) in der Ausgangsstellung (z.B. form- und/oder kraftschlüssig) gehalten wird. Hierbei kann es sich z.B. um eine Eingriffsstruktur handeln, mit der die zweite Teilanordnung in die erste Teilanordnung eingreift und/oder umgekehrt. Der entsprechende Eingriff kann auch mit jeglichem anderen unbeweglichen Teil der Halterung oder aber der Fahrzeugstruktur hergestellt werden. Beispielsweise kann es sich um eine Rastverbindung handeln. Bei Überschreiten einer Schwellenkraft kann die entsprechende Rastverbindung bzw. der Eingriff überwunden und somit aufgelöst werden und kann die zweite Teilanordnung dann relativ zur ersten Teilanordnung bewegt werden. Durch die dabei hervorgerufenen bevorzugten Rückstellkräfte kann die zweite Teilanordnung wieder zurück in die Ausgangsstellung gedrängt werden und kann dort dann vorzugsweise auch wieder der mechanische Eingriff bzw. die Rastverbindung hergestellt werden. Auch auf diese Weise wird ein sicherer Halt der zweiten Teilanordnung und somit des Sensors in der Ausgangsstellung erzielt. Die Rückstellelemente werden dabei von der Aufgabe entlastet, die Kräfte zum Halten der zweiten Teilanordnung in der Ausgangsstellung alleine aufbringen zu müssen.

Weiter ist die erste und zweite Teilanordnung relativ zueinander linear verschiebbar, d.h., die erwähnte Relativbeweglichkeit dieser Teilanordnungen zueinander kann eine lineare Verschiebbarkeit umfassen und/oder als eine solche realisiert sein. Bei der linearen Verschiebbarkeit kann es sich um die einzige Relativbewegungsmöglichkeit zueinander handeln. Mit anderen Worten kann die Relativbewegung der Teilanordnung allgemein einaxial erfolgen, entlang der entsprechenden linearen Achse der Relativverschiebbarkeit. Bevorzugt erstreckt sich die lineare Achse der Relativverschiebung in Fahrtrichtung oder entlang einer Fahrtrichtung und/oder entlang einer Fahrzeuglängsachse. Beispielsweise kann es sich um eine horizontale Achse handeln. Auf diese Weise können erwartete Kollisionskräfte besonders effektiv in Relativbewegungen der Teilanordnungen umgesetzt bzw. hierdurch kompensiert werden, insbesondere wenn sich die Halterung im Bereich einer Fahrzeugfront befindet. Genauer gesagt kann dann eine Richtung der möglichen Relativbewegung im Wesentlichen einer Richtung der im Kollisionsfall einwirkenden Kräfte entsprechen, sodass diesen Kräften effektiv ausgewichen werden kann, insbesondere unter einem begrenzten Risiko von Verklemmungen der Teilanordnungen zueinander.

Weiter ist vorgesehen, dass die erste Teilanordnung einen Führungsabschnitt umfasst, an oder in dem die zweite Teilanordnung beweglich geführt ist. Beispielsweise kann die zweite Teilanordnung zumindest teilweise in dem Führungsabschnitt aufgenommen sein, diesen aufnehmen oder anderweitig zumindest abschnittsweise in diesen eingreifen. Durch Abgleiten entlang und/oder in dem Führungsabschnitt kann die zweite Teilanordnung dann relativ zu der ersten Teilanordnung bewegt werden. Über die Form und/oder Dimensionierung des Führungsabschnittes kann somit eine Achse der Relativbewegung definiert werden und insbesondere eine lineare Verschiebungsachse.

Weiter ist in diesem Zusammenhang vorgesehen, dass der Führungsabschnitt einen Lagerabschnitt der zweiten Teilanordnung aufnimmt und diesen vorzugsweise an wenigstens drei Seiten zumindest abschnittsweise umgibt. Bei dem Lagerabschnitt kann es sich z.B. um einen Abschnitt einer Außenkontur der zweiten Teilanordnung handeln, beispielsweise um einen Vorsprung und vorzugsweise um einen nachstehend erläuterten keil- oder konusförmigen Abschnitt. Dieser kann in einen korrespondierend geführten Führungsabschnitt, der dann vorzugsweise als entsprechend dimensionierte und/oder geformte Ausnehmung ausgebildet ist, eingeschoben werden. Im Rahmen der Relativbeweglichkeit kann der Lageabschnitt im Führungsabschnitt linear verschoben werden. Der Führungsabschnitt kann den Lagerabschnitt an im Wesentlichen parallel zu einer Bewegungsachse der Relativbewegung verlaufenden Seiten des Lagerabschnitts umgeben und/oder an diesen anliegen. Entlang dieser Bewegungsachse betrachtet kann der Lagerabschnitt auch einen (dann bevorzugt quer zur Bewegungsachse verlaufenden) Vorder- und Rückabschnitt umfassen. Optional kann der Führungsabschnitt wenigstens auch diesen Vorderabschnitt umgeben, beispielsweise um eine Anschlagskontur dort bereitzustellen und/oder eine Ausgangsstellung zu definieren. Eine entsprechende Anschlagskontur zum Wechselwirken mit dem Rückabschnitt (oder auch Hinterende) des Lagerabschnitts kann ebenfalls von der Halterung und insbesondere der ersten Teilanordnung umfasst sein. Diese kann aber auch entfallen, beispielsweise wenn eine Bewegung in die entsprechende Richtung aus der Ausgangsstellung durch die Rückstellkräfte und/oder eine etwaige Deformierbarkeit des Rückstellelements begrenzt ist.

Dabei ist vorgesehen, dass der Lagerabschnitt entlang einer linearen Verschiebungsachse aus der Ausgangsstellung relativ zu dem Führungsabschnitt verschiebbar ist, wobei eine Querschnittsfläche des (stehenden) Lagerabschnitts entlang der Verschiebungsachse zumindest abschnittsweise zunimmt. Wie auch bei sämtlichen anderen hierin geschilderten Aspekten, kann dabei die erste Teilanordnung allgemein feststehend sein (z.B. feststehend innerhalb des Fahrzeugs) und kann die zweite Teilanordnung beweglich daran gelagert bzw. beweglich in dieser geführt sein.

Allgemein kann vorgesehen sein, dass der Lagerabschnitt und Führungsabschnitt korrespondierend zueinander geformt sind, um einen Eingriff und/oder eine Führung zu ermöglichen. Insbesondere dann, wenn, wie allgemein bevorzugt, der Lagerabschnitt im Führungsabschnitt aufgenommen ist, kann der Führungsabschnitt bzw. eine hiervon definierte Ausnehmung korrespondierend zum Lagerabschnitt geformt sein. Dies kann bedeuten, dass bei der geschilderten Zunahme der Querschnittsfläche entlang der Verschiebungsachse die Querschnittsfläche des Führungsabschnitts bzw. einer hiervon definierten Ausnehmung abnehmen kann, und zwar bevorzugt in gleichem Maße, wie die Querschnittsfläche des Lagerabschnitts zunimmt. Auf diese Weise wird eine ausreichende Führungswirkung während der Verlagerung entlang der Verschiebungsachse gewährleistet, beispielsweise da dann ein Spiel zwischen Führungs- und Lagerabschnitt begrenzt ist.

Allgemein kann vorgesehen sein, dass der Lagerabschnitt mit einem Spiel in Richtungen quer zur Verschiebungsachse im Führungsabschnitt aufgenommen und/oder geführt ist. Dies ist bevorzugt jedoch derart begrenzt, dass die Gefahr eines Verklemmens des Lagerabschnitts im Führungsabschnitt minimiert ist und auch keine signifikanten Relativbewegungen in Richtung des Spiels möglich sind. Beispielweise kann das Spiel in sämtliche Raumrichtungen weniger als 1 mm und vorzugsweise weniger als 0,5 mm betragen.

Die Zunahme der Querschnittsfläche kann dadurch erreicht werden, dass der Lagerabschnitt seine Abmessungen in wenigstens einer quer zur Verschiebungsachse verlaufenden Dimension ändert. Vorzugsweise kann es sich hierbei um eine Dimension entlang einer ersten Achse handeln, die orthogonal zur Verschiebungsachse verläuft. Die Verschiebungsachse und die erste Achse können Achsen eines kartesischen Koordinatensystems sein bzw. ein solches aufspannen. Entlang der dritten Achse dieses Koordinatensystems kann der Lagerabschnitt zusätzlich oder alternativ ebenfalls seine Dimension ändern, um eine Zunahme der Querschnittsfläche zu erreichen.

Bevorzugt nimmt die Querschnittsfläche kontinuierlich und insbesondere linear entlang der Verschiebungsachse zu. Gleiches kann auch für die Abmessungen entlang der vorstehend geschilderten Achsen des Lagerabschnitts gelten. Allgemein kann eine Längsachse von Führungs- und/oder Lagerabschnitt parallel zur Verschiebungsachse verlaufen oder mit dieser zusammenfallen.

Gemäß einer Variante ist die Querschnittsfläche des Lagerabschnitts (auf der die Verschiebungsachse bevorzugt allgemein orthogonal steht) zumindest abschnittsweise oval und/oder ellipsenförmig. Die vorstehend geschilderten weiteren Achsen können dann entlang der Hauptachse und/oder Nebenachse die entsprechenden Ellipsenformen verlaufen.

Es kann aber ebenso vorgesehen sein, dass die Querschnittsfläche zwei einander gegenüberliegende gekrümmte Endbereiche (oder auch Randbereiche) umfasst, die z.B. halbkreisförmig gekrümmt sein können. Ein Radius der Endbereiche bzw. von deren Halbkreisform kann entlang der Verschiebungsachse zunehmen. Die Endbereiche können über geringer gekrümmte oder auch geradlinige Abschnitte miteinander verbunden sein. Dann können die vorstehend erwähnten weiteren Achsen derart positioniert sein, dass die die beiden gegenüberliegenden gekrümmten Endbereiche miteinander verbinden und/oder die einander gegenüberliegenden weniger stark gekrümmten oder auch geradlinigen Bereiche.

Allgemein kann die Änderung der Querschnittsfläche derart erfolgen, dass sich der Lagerabschnitt in wenigstens einer quer zur Verschiebungsachse verlaufenden Richtung vergrößert. Dies kann damit einhergehen, dass der Lagerabschnitt bevorzugt in Richtung der Ausgangsstellung betrachtet spitz zuläuft und/oder sich verjüngt. Insbesondere kann dies in einer keilförmigen Struktur bzw. Form des Lagerabschnitts resultieren. Erfolgt eine entsprechende Aufweitung um zwei Achsen (innerhalb der Querschnittsfläche), die bevorzugt jeweils quer zur Verschiebungsachse verlaufen, kann eine pyramidenartige Struktur und/oder ein sich um entsprechend mehrere Achsen oder an mehreren Seiten aufweitender Querschnitt des Lagerabschnitts erzielt werden. Erneut kann der Führungsabschnitt und insbesondere eine hiervon umfasste Ausnehmung zur Aufnahme des Lagerabschnitts sich dann korrespondierend verjüngen bzw. aufweiten. Eine entsprechende sich um zwei Achsen ändernde Abmessung des Lagerabschnitts kann in einer Form resultieren, die als Doppelkonus bezeichnet werden kann.

Anders ausgedrückt kann der Lagerabschnitt in einer (z.B. quer zur Querschnittsebene) verlaufenden Ebene bewegbar sein. In einer Draufsicht auf die Ebene bzw. einen in dieser Ebene verlaufenden Querschnitt kann der Lagerabschnitt keilförmig sein. Insbesondere kann er sich entlang der Verlagerungsachse und mit zunehmender Distanz von der Ausgangsstellung aufweiten. Entlang der Außenseiten des Querschnittes können die vorstehend erläuterten halbkreisförmigen Endbereiche ausgebildet sein. Beim Verschieben der halbkreisförmigen Endbereiche entlang der Verlagerungsachse und in einer von der Ausgangsstellung weg gerichteten Richtung kann, wie vorstehend erwähnt, der Radius der entsprechenden Halbkreisformen vergrößert werden.

Die Verschiebung der zweiten Teilanordnung relativ zur ersten Teilanordnung kann alternativ zu der vorstehend beschriebenen linearen Verschiebungsachse auch auf einem bzw. entlang von einem Kreisbogenabschnitt erfolgen. Tangenten an diesen Kreisbogenabschnitt können in allen Punkten in etwa (z.B. mit einer Winkelabweichung von weniger als 30°) der Fahrtrichtung entsprechen. Die geometrischen Verhältnisse im keil- oder konusförmigen Bereich des Führungsabschnitts und des Lagerabschnitts werden in diesem Fall nicht entlang einer linearen Verschiebeachse, sondern entsprechend entlang des Kreisbogenabschnitts definiert, verlaufen also beispielsweise entsprechend gekrümmt. Der Radius des Kreisbogens kann bezogen auf die Dimensionen des Führungsabschnitts und des Lagerabschnitts relativ groß sein und deren Abmessungen allgemein übersteigen. Beispielsweise kann der Radius mehr als 200 mm betragen.

Allgemein ist darauf hinzuweisen, dass die hierin geschilderte Querschnittsfläche bevorzugt orthogonal zur Verschiebungsachse steht, wohingegen der Querschnitt, der der Bewegungsebene entspricht, parallel zu der Verschiebungsachse verlaufen bzw. diese enthalten kann.

Jegliche hierin geschilderten Formen bzw. Formänderungen des Lager- und Führungsabschnittes können die verklemmungsfreie Relativbeweglichkeit dieser Abschnitte zueinander verbessern. Insbesondere kann hierdurch auch eine zentrierende Wirkung bereitgestellt werden, sodass die zweite Teilanordnung definiert relativ zur ersten Teilanordnung bewegbar ist. Insbesondere kann diese bei einer Rückkehr in die Ausgangsstellung wieder lagepräzise in die entsprechende Ausgangsstellung bewegt werden bzw. in definierter Weise relativ zur ersten Teilanordnung und somit innerhalb des Fahrzeugs positioniert werden.

Zusammengefasst kann also vorgesehen sein, dass sich der Lagerabschnitt in Richtung der Ausgangsstellung betrachtet (und z.B. ausgehend von einem gegenüberliegenden rückseitigen Abschnitt oder hinteren Ende) zumindest abschnittsweise verjüngt und/oder dass der Lagerabschnitt keilförmig ausgebildet ist.

Bei einer weiteren Ausführungsform ist wenigstens eine sich entlang der Verschiebungsachse erstreckende Eingriffsstruktur zwischen dem Führungsabschnitt und dem Lagerabschnitt vorgesehen. Der Eingriff erfolgt vorzugsweise mechanisch. Er kann in einem Formschluss resultieren, z.B. in wenigstens einer Richtung quer zur Verschiebungsachse. Insbesondere kann es sich um den Eingriff eines Führungsvorsprungs (z.B. Führungsrippe) in eine Führungsnut handeln, wobei eine von Führungsvorsprung und Führungsnut in dem Führungsabschnitt und/oder Lagerabschnitt ausgebildet ist und die entsprechend andere von Führungsvorsprung und Führungsnut in dem entsprechenden anderen dieser Abschnitte. Die Führungsnut kann sich entlang der Verschiebungsachse erstrecken, z.B. von einem Bereich der Ausgangsstellung im Führungsabschnitt bis zur gewünschten Endposition und/oder in Richtung der Fahrzeugstruktur. Sie kann die verklemmungsfreie Führung des Lagerabschnitts im Führungsabschnitt verbessern.

Auch der Führungsvorsprung kann sich entlang der Verschiebungsachse erstrecken, z.B. entlang eines Großteils oder der vollständigen Länge des Lagerabschnitts. Vorzugsweise ist eine Mehrzahl von Führungsvorsprüngen vorgesehen, z.B. an unterschiedlichen Seiten von Führungsabschnitt oder Lagerabschnitt. Beispielsweise kann an wenigstens drei unterschiedlichen Seiten ein entsprechender Vorsprung und vorzugsweise eine langgestreckte Führungsrippe ausgebildet sein. Vorzugsweise ist vorgesehen, dass in der Ausgangsstellung keine Führungswirkung erzeugt wird und/oder kein Kontakt zwischen Führungsvorsprung und Führungsnut vorliegt. Hierdurch können Überbestimmungen vermieden werden. Allerdings kann diese Führungswirkung bzw. dieser Kontakt dann bei einem Bewegen aus der Ausgangsstellung hergestellt werden und vorzugsweise bereits nach einer Bewegungsstrecke von maximal 1 mm oder maximal 10 mm. Allgemein kann der Führungsvorsprung zum Vermeiden von Verklemmung gerundete Kanten und/oder Radien aufweisen, um somit den Eingriff in die Führungsmut zu erleichtern.

Weiter kann allgemein vorgesehen sein, dass der Führungsvorsprung und zumindest eine nach außen weisende Fläche hiervon nicht der vorstehend geschilderten Konusform und insbesondere Doppelkonusform des Lagerabschnitts und/oder der Ausnehmung des Führungsabschnitts folgt. Stattdessen kann sich dieser parallel zur Verlagerungsachse und/oder der vorstehend geschilderten Bewegungsebene erstrecken. Auch die Führungsnut kann analog ausgebildet sein, d.h. eine entsprechend ausgerichtete Grundebene aufweisen (am Grund der Nut). Es hat sich gezeigt, dass hierdurch Verklemmungen reduziert werden können, da dann der Kontakt zwischen Führungsnut und Führungsvorsprung im Wesentlichen in einer Ebene parallel zur Verschiebungsachse erfolgt.

Gemäß einem weiteren Aspekt ist das Rückstellelement eine (z.B. langgestreckte) Zugfeder. Dieses kann mit einem ersten Ende an der ersten Teilanordnung und mit einem zweiten (gegenüberliegenden) Ende an der zweiten Teilanordnung befestigt sein. Je nach dem Ausmaß der Relativverlagerung und insbesondere eines Verschiebens der zweiten Teilanordnung aus der Ausgangsstellung vorzugsweise in Richtung der Fahrzeugstruktur kann diese Zugfeder gedehnt (d.h. verlängert) werden. Dies ist gleichbedeutend mit einer elastischen Deformation der Zugfeder und kann mit entsprechenden Rückstellkräften einhergehen. Das Vorsehen der Zugfeder kann eine kompakte Baugröße der Halterung ermöglichen, beispielsweise da die zurückzudrängende zweite Teilanordnung sich nicht an weiteren Bestandteilen der Halterung abstützen muss, um eine alternative Druckfeder oder dergleichen zu komprimieren.

Insbesondere kann vorgesehen sein, dass wenigstens zwei Zugfedern vorgesehen sind, die dann bevorzugt den Lagerabschnitt der zweiten Teilanordnung zwischen sich einschließen und/oder beidseitig von diesem angeordnet sind. Beispielsweise können sie sowohl den Führungsabschnitt als auch den Lagerabschnitt zwischen sich aufnehmen. Auf diese Weise kann eine Zentrierung und somit verklemmungsfreie Führung des Lagerabschnitts im Führungsabschnitt verbessert werden, da die Zugfedern im Wesentlichen gleichartig bei einem Verschieben des Lagerabschnitts gedehnt werden. Unerwünscht auf den Lagerabschnitt einwirkende Momente können somit begrenzt werden.

Es kann (alternativ) auch vorgesehen werden, eine einzelne Zugfeder zentral im Innenraum des beschriebenen Doppelkonus anzuordnen. Die Stirnseite des Doppelkonus weist dann bevorzugt einen entsprechenden Durchbruch für die Durchführung der Feder zu ihrem Anbindungspunkt an der ersten Teilanordnung auf.

Die Erfindung schlägt auch eine Halterung für einen Fahrzeugsensor an einer Fahrzeugstruktur vor, mit allen in Anspruch 5 aufgeführten technischen Merkmalen, insbesondere mit:
- einer ersten Teilanordnung, die an der Fahrzeugstruktur befestigbar ist und die einen Führungsabschnitt umfasst;
- einer zweiten Teilanordnung, an der der Sensor befestigbar ist und die einen Lagerabschnitt umfasst, der an oder in dem Führungsabschnitt beweglich geführt ist;
wobei der Lagerabschnitt aus einer Ausgangsstellung relativ zu dem Führungsabschnitt entlang einer Verschiebungsachse verschiebbar ist, wobei eine Querschnittsfläche des Lagerabschnitts entlang der Verschiebungsachse zumindest abschnittsweise zunimmt.

Jegliche der hierin geschilderten Weiterbildungen, Varianten und Ausführungsformen zu den obigen Merkmalen können bei diesem Aspekt ebenfalls vorgesehen sein. Ein Unterschied zum vorstehend diskutierten Aspekt ist darin zu sehen, dass bei dieser Variante nicht zwingend Rückstellkräfte erzeugt werden. Stattdessen zeichnet sich diese Halterung durch eine bevorzugte, da zuverlässige und verklemmungsfreie Relativbewegbarkeit von erster und zweiter Teilanordnung aus. Dies wird dadurch erreicht, dass ein Führungsabschnitt und Lagerabschnitt dieser Teilanordnungen in definierter Weise miteinander zusammenwirken, insbesondere derart, dass die vorstehend erläuterte Verschiebbarkeit entlang einer definierten (linearen) Achse und/oder einer allgemeinen verklemmungsfreien Bewegung erzielbar sind.

Dies ist dahingehend vorteilhaft, als dass Bewegungen der Halterung und insbesondere des Sensors in Kollisionsfällen besser steuerbar und/oder vorhersehbar sind. Dies erleichtert eine Auslegung der Fahrzeugfront zum zuverlässigen Mindern von Verletzungsrisiken im Falle eines Fußgänger- oder Radfahreraufpralls. Weiter kann der Sensor dann derart ausgestaltet sein, dass er auch bei einer Änderung seiner Position entlang der definiert eingestellten Verlagerungsachse noch auswertbare Signale liefert und/oder kann ein Einmessvorgang des Sensors zum erneuten Kalibrieren nach einem Kollisionsfall aufgrund der veränderten Position in lediglich einer Raumrichtung (bzw. entlang einer Raumachse) geringer ausfallen, als wenn dieser aufgrund beliebiger Deformierungsfreiheitsgrade in beliebigen Richtungen verschiebbar wäre.

Die Erfindung betrifft auch ein Fahrzeug, insbesondere einen Personenkraftwagen oder ein Lastkraftwagen, mit einer Anordnung nach jeglichen hierin geschilderten Aspekten. Allgemein kann es sich um ein Kraftfahrzeug handeln.

Insbesondere kann in diesem Zusammenhang vorgesehen sein, dass die Fahrzeugstruktur, an der die Halterung befestigt ist, ein Rohbauteil und insbesondere ein Stoßfängerquerträger ist und/oder dass der Sensor ein Radarsensor ist. Der Sensor kann allgemein auch nahe eines Fahrzeughecks oder einer Fahrzeugseite positioniert sein. Jegliche hierin getätigte Bezugnahme auf eine Fahrtrichtung kann gleichbedeutend mit einer Richtung sein oder durch eine solche Richtung ersetzt werden, die vom Sensor geradlinig durch die Außenhaut des Fahrzeugs in die Umgebung weist (also z.B. auch eine Richtung nach hinten oder zur Seite).

Ausführungsbeispiele der Erfindung werden im Folgenden anhand der beigefügten schematischen Figuren erläutert.
- Fig. 1: zeigt eine schematische Übersichtsdarstellung eines Fahrzeugs mit einer Sensor-Halterung gemäß einem ersten Ausführungsbeispiel.
- Fig. 2: zeigt eine perspektivische Darstellung der Sensorhalterung aus Fig. 1 in einer Detailansicht.
- Fig. 3: zeigt eine Schnittansicht der Sensorhalterung aus Fig. 2.
- Fig. 4: zeigt eine Einzelteilansicht eines Lagerabschnitts der Sensorhalterung der vorangehenden Figuren.
- Fig. 5: zeigt eine Einzelteilansicht eines Führungsabschnitts der Sensorhalterung der vorangehenden Figuren.
- Fig. 6: zeigt eine zu Fig. 3 analoge Schnittansicht der Sensorhalterung der vorangehenden Figuren im Kollisionsfall.
- Fig. 7: zeigt eine Detail-Schnittansicht einer Sensor-Halterung gemäß einem weiteren Ausführungsbeispiel.
- Fig. 8: zeigt eine Teilansicht einer Sensor-Halterung gemäß einer alternativen Ausführungsform.

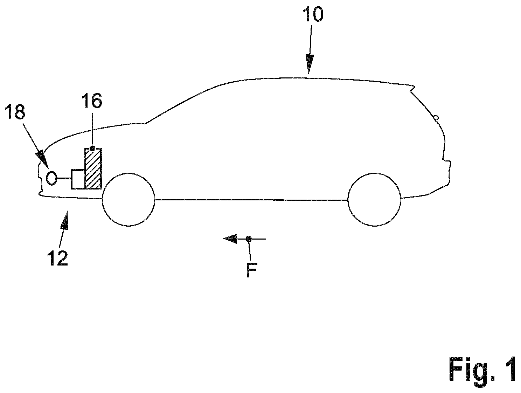

In Fig. 1 ist ein Fahrzeug 10, umfassend eine Halterung (im Folgenden Sensorhalterung) 12 gemäß einem Ausführungsbeispiel der Erfindung gezeigt. Lediglich beispielhaft befindet sich die Sensorhalterung 12 in einem Frontbereich des Fahrzeugs 10. Sämtliche Richtungsbezeichnungen beziehen sich im Folgenden auf eine Vorwärtsfahrt in Richtung F, wie sie in Fig. 1 eingetragen ist, wenn nicht anders angegeben oder ersichtlich. Genauer gesagt ist die Sensorhalterung 12 an einem Stoßfängerquerträger 16 angeordnet und insbesondere mit diesem verschraubt. Der Stoßfängerquerträger 16 verbindet in allgemein bekannter Weise parallel zueinander verlaufende Streben einer Fahrzeugkarosserie und insbesondere parallel zueinander verlaufende Längsträger.

Die Sensorhalterung 12 dient dazu, einen Sensor 18, der hierin als ein Umfelderfassungssensor und genauer gesagt ein Radarsensor zur Fahrzeugumfelderfassung ausgebildet ist, möglichst nahe an der Außenhülle bzw. Außenhaut des Fahrzeugs 10 zu positionieren. Hierfür ermöglicht sie das Einnehmen eines Abstands des Sensors 18 relativ zum Stoßfängerquerträger 16, sodass der Sensor 18 weiter vorne in die Fahrtrichtung F betrachtet positioniert ist. Er befindet sich dann vorzugsweise hinter einem Kühlergrill und insbesondere hinter einem freiliegenden Abschnitt des Kühlergrills (also hinter einer Öffnung oder einem Loch im Kühlergrill). Dann kann der Sensor 18 ohne erhebliche Störkonturen durch das Fahrzeug 10 das Umfeld erfassen. Weiter wird hierdurch ermöglicht, dass der Öffnungsquerschnitt vergleichsweise klein ist, da die vom Sensor 18 abgestrahlte Radarstrahlung kegelförmig abgestrahlt wird, d.h. die Strahlung zunächst in einem Raumvolumen mit begrenzter Querschnittsfläche ausstrahlt.

Andererseits bedeutet dies aber auch, dass in einem Kollisionsfall der Fahrzeugfront mit der Umgebung (z.B. einem parkenden Fahrzeug oder einem Fußgänger) der Sensor 18 unmittelbar eine Störkontur bilden bzw. von Kollisionskräften maßgeblich beeinflusst werden kann. Hierfür sieht die Erfindung die nachstehend erläuterten Bewegungsmöglichkeiten des Sensors 18 bzw. der Halterung 12 vor.

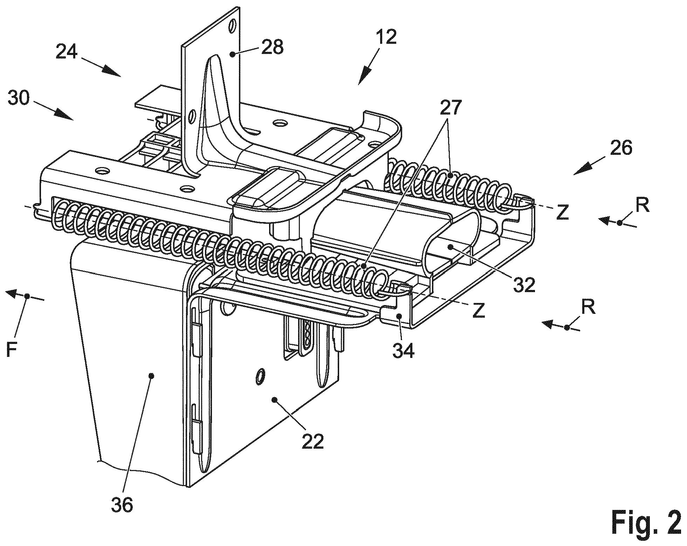

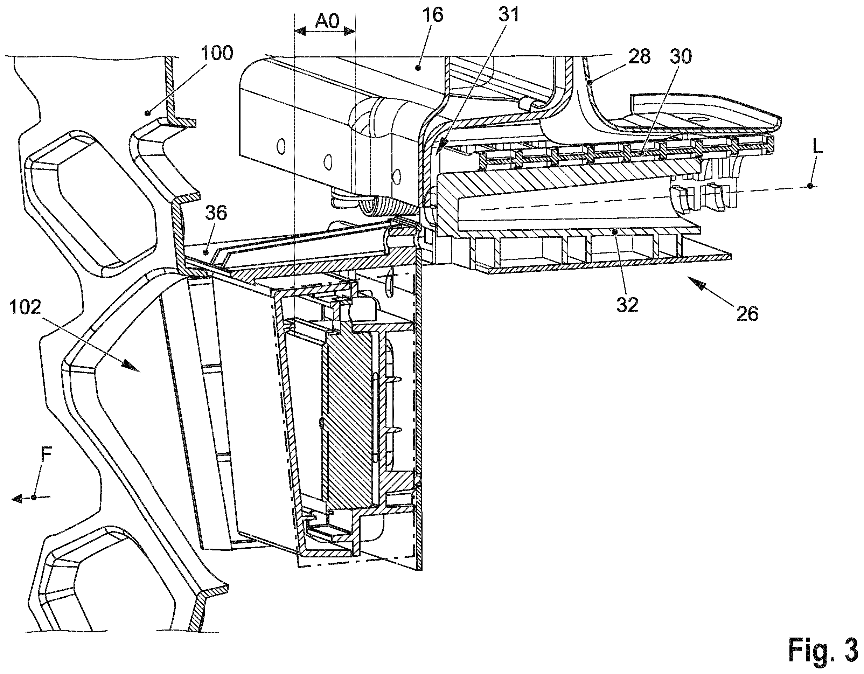

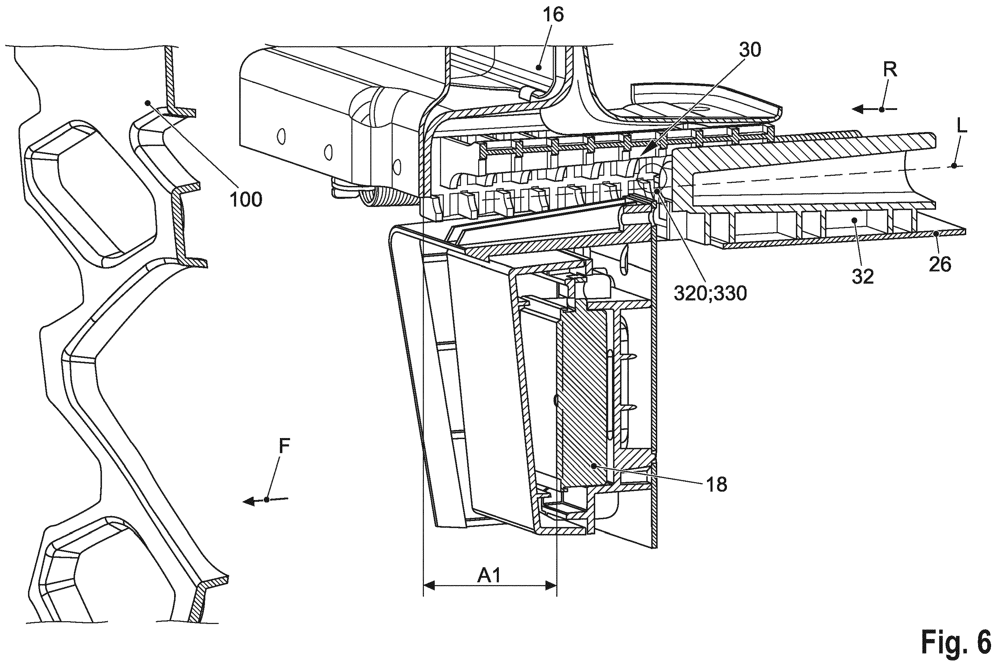

In Fig. 2 ist die Sensorhalterung 12 samt Aufnahmebereich 22 für den (dort nicht einsehbaren) Sensor 18 gezeigt. Eine Anbindung der Sensorhalterung 12 an das Fahrzeug 10 sowie dessen Positionierung innerhalb des Fahrzeugs verdeutlicht sich auch aus den nachstehend diskutierten Ansichten der Fig. 3 und Fig. 6.

Zurückkommend auf Fig. 2 erkennt man, dass die Sensorhalterung 12 allgemein mehrteilig aufgebaut ist. Sie umfasst eine erste Teilanordnung 24, die allgemein feststehend relativ zu dem Fahrzeug 10 ist und auch an diesem befestigt ist. In dieser ersten Teilanordnung 24 ist eine zweite Teilanordnung 26 beweglich gelagert. Beide Teilanordnungen 24, 26 sind mehrteilig ausgebildet und allgemein aus Kunststoffmaterialien und Blechhalbzeugen hergestellt. Denkbar ist alternativ ein teilweises oder vollständiges konstruktives Verschmelzen (bzw. Ausbilden als gemeinsame Teile) der jeweiligen Einzelkomponenten der Teilanordnungen 24, 26.

Die erste Teilanordnung 24 umfasst ein Kopplungselement 28, das mit dem Stoßfängerquerträger 16 verschraubbar und/oder anderweitig an diesem mechanisch befestigbar ist (siehe nachfolgende Ansichten in Fig. 3 und Fig. 6).

Weiter umfasst die erste Teilanordnung 24 auch einen Führungsabschnitt 30, der beispielhaft als ein separates Bauteil vom Befestigungselement 28 ausgebildet und z.B. über eine Steck- und/oder Schraubverbindung daran gehalten ist.

Die zweite Teilanordnung 26 umfasst einen ebenfalls beispielhaft als separates Bauteil ausgebildeten Lagerabschnitt 32, der z.B. über eine Klemmverbindung oder auch Steck- und/oder Schraubverbindung an einem Trägerbauteil 34 der zweiten Teilanordnung 26 befestigt ist. An dem Trägerbauteil 34, das allgemein winklig ausgebildet ist, ist auch der Aufnahmebereich 22 für den Sensor 18 ausgebildet sowie ein optional gezeigtes Abschirmelement bzw. ein Anschlagrahmen 36. Dieser dient dazu, einwirkende Kräfte aufzunehmen, da er einen in Fahrtrichtung F nach am weitesten vorne stehenden Bereich der zweiten Teilanordnung 26 bildet. Der Sensor 18 ist gegenüber diesem Anschlagrahmen 36 in Fahrtrichtung F betrachtet weiter hinten positioniert bzw. gegenüber diesem in Richtung des Stoßfängerquerträgers 16 eingerückt.

Die erste Teilanordnung 24 und die zweite Teilanordnung 26 sind über Rückstellelemente 27 in Form von Zugfedern miteinander verbunden. Lediglich beispielhaft sind dabei zwei Zugfedern 27 vorgesehen. Diese erstrecken sich entlang einer Zugfederlängsachse Z, die allgemein parallel zur nachstehend anhand von Fig. 3 erläuterten linearen Verlagerungsachse L verläuft. Die Zugfedern 27 sind einteilig. Die Zugfedern 27 sind beidseitig von dem Lagerabschnitt 32 angeordnet bzw. nehmen diesen zwischen sich auf. Bei einer nachstehend geschilderten Verlagerung entlang der linearen Verlagerungsachse L werden die Zugfedern 27 daher im Wesentlichen in einem gleichen Ausmaß gedehnt und erzeugen somit auch im Wesentlichen die entlang der Verlagerungsrichtung wirkenden Rückstellkräfte R. Diese wirken in die Fahrtrichtung F und drängen die zweite Teilanordnung 26 in ihre in Fig. 3 gezeigte Ausgangsstellung zurück.

Aufbau und Funktionsweise der Halterung 12 verdeutlichen sich zusätzlich aus Fig. 3. Diese zeigt die Halterung 12 in einem an dem Stoßfängerquerträger 16 angebrachten Zustand. Wie erläutert, ist hierbei das Kopplungselement 28 an dem beispielhaft als Hohlträger ausgebildeten und bevorzugt allgemein metallischen Stoßfängerquerträger 16 mechanisch befestigt. In Fig. 3 (aber auch Fig. 6) gezeigt ist eine Querschnittsansicht, wobei die Querschnittsebene einer vertikalen Raumebene entspricht und eine Achse der Fahrtrichtung F enthält. Anders ausgedrückt handelt es sich um eine Teil-Längsschnittansicht durch das Fahrzeug 10.

Als eine weitere Fahrzeugkomponente ist ein Kühlerschutzgitter 100 gezeigt, welches eine Außenhaut des Fahrzeugs 10 bildet, sowie einen Abschnitt einer außenliegenden Frontpartie des Fahrzeugs 10. Man erkennt, dass das Kühlergitter 100 mit Öffnungen 102 versehen ist, wobei hinter einer dieser Öffnungen die Sensorhalterung 12 und genauer gesagt der hiervon gehaltene Sensor 18 positioniert ist.

Man erkennt zunächst, dass die Halterung 12 derart relativ zum Stoßfängerquerträger 16 positioniert ist, dass der hiervon gehaltene Sensor 18 in die Fahrtrichtung F gegenüber dem Sensorquerträger 16 nach vorne verlagert ist. Anders ausgedrückt ist in der dargestellten Ausgangsstellung, die in einem Normalbetrieb ohne Kollisionsfall eingenommen wird, ein Abstand A0 zwischen dem Sensor 18 und dem Stoßfängerquerträger 16 vorhanden. Dieser kann z.B. zwischen 30 mm und 200 mm betragen und vorzugsweise zwischen 50 mm und 100 mm.

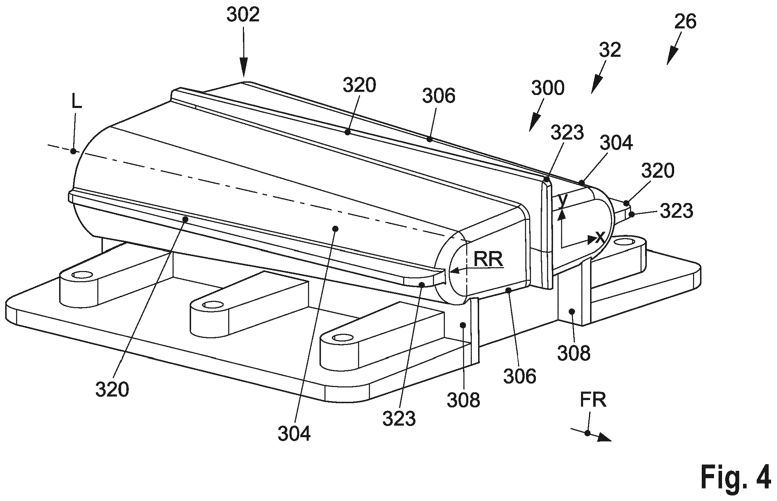

In der dargestellten Ausgangsstellung ist der Lagerabschnitt 32 in einem maximalen Ausmaß und insbesondere vollständig in dem Führungsabschnitt 30 aufgenommen. Genauer gesagt ist er darin in einem maximalen Ausmaß in Fahrtrichtung F eingerückt bzw. vorne positioniert. Die Position des Lagerabschnitts 32 kann in Fahrtrichtung F betrachtet konstruktiv festgelegt sein. Hierdurch kann die Ausgangsstellung definiert und eine weitere Verlagerung des Lagerabschnitts 32 in die Fahrtrichtung F verhindert werden. Ein beispielhaftes konstruktives Merkmal, um dies zu erreichen, ist eine Anlagefläche, wie zum Beispiel eine feststehende Kontaktfläche des Führungsabschnitts 30 zu einer Stirnseite der Kante 323 aus der nachfolgende Figur 4.

Darauf hinzuweisen ist, dass der Lagerabschnitt 32 unbeweglich mit den weiteren Komponenten der zweiten Teilanordnung 26 gekoppelt ist, d.h. eine Verlagerung hiervon in entsprechenden Verlagerungen der gesamten zweiten Teilanordnung 26 und insbesondere des Sensors 18 resultieren.

Der Lagerabschnitt 32 ist entlang einer linearen Verlagerungsachse L innerhalb des Führungsabschnitts 30 verschiebbar gelagert. Insbesondere kann dieser entgegen der Fahrtrichtung F betrachtet in Fig. 3 nach rechts verlagert werden, also gegenüber dem Stroßfängerquerträger 16 nach hinten. Wie in Fig. 6 gezeigt, kann dies darin resultieren, dass der Sensor 18 schlussendlich auch unterhalb des Stoßfängerquerträgers 16 positioniert ist oder auch geringfügig gegenüber diesem weiter nach hinten eingerückt ist. Die Verlagerung tritt dann auf, wenn gegen die zweite Teilanordnung 26 und insbesondere den Anschlagrahmen 36 Kräfte von außen einwirken. Erwartungsgemäß liegen dann Kräfte vor, die sich im Wesentlichen parallel zur linearen Verlagerungsachse L erstrecken und entgegen der Fahrtrichtung F verlaufen. Da aber in dieser Richtung die geschilderte Verlagerungsmöglichkeit bereitgestellt wird, kann der Sensor 18 diesen Kräften mit einer entsprechend linearen Bewegung definiert ausweichen, ohne dass ein erhöhtes Risiko von Verklemmungen des Lagerabschnitts 32 im Führungsabschnitt 30 besteht.

In Fig. 4 ist der Lagerabschnitt 32 der zweiten Teilanordnung 26 in einer Einzelteilansicht gezeigt. Die Perspektive ist dabei gegenüber Fig. 3 spiegelverkehrt. Folglich blickt man auf ein Vorderende 300 des Lagerabschnitts 32, der in Fig. 3 dem Anschlagbereich 31 des Führungsabschnitts 30 gegenüberliegt und/oder an diesem anliegt. Ferner gezeigt ist ein Verlauf der linearen Verlagerungsachse L. Diese spannt mit zwei zueinander orthogonal hierzu verlaufenden Achsen X, Y ein kartesisches Koordinatensystem auf. Die Achsen X, Y bilden dabei beispielhaft eine horizontale Raumebene, wobei die Achse Y einer vertikalen Raumrichtung entspricht. Weiter bilden die Achsen X, Y die Ebene einer Querschnittsfläche des Lagerabschnitts 32, die orthogonal zur linearen Verlagerungsachse L verlaufen. Die X- und L-Achse definieren hingegen eine Bewegungsebene, in der der Lagerabschnitt 32 verlagerbar ist.

Man erkennt, dass die Querschnittsfläche des Lagerabschnitts 32 entgegen der Fahrtrichtung F betrachtet (d.h. vom vorderen Ende 300 zu einem hinteren Ende 302) zunimmt, und zwar kontinuierlich zunimmt. Dabei wird unter Querschnittsfläche eine von den Außenkonturen eingeschlossene Fläche verstanden, auch wenn der Lagerabschnitt 32 hohl ausgebildet sein kann. Dieser hohle Bereich kann also folglich ebenfalls zur Querschnittsfläche beitragen. Die Querschnittsaufweitung erfolgt in dem gezeigten Beispiel dadurch, dass Abmessungen entlang beider Achsen X, Y hin zum Ende 302 zunehmen. Genauer gesagt weitet sich der Lagerabschnitt 32 entlang dieser beiden Achsen zunehmend auf. Er weist folglich jeweils zwei einander gegenüberliegende Seitenbereiche auf, die in Richtung des Vorderendes 300 aufeinander zulaufen und genauer gesagt spitz aufeinander zulaufen. Hierbei handelt es sich um die gerundeten äußeren Kanten oder Ränder 304 (oder auch äußere Endbereiche), die im Wesentlichen entlang der linearen Bewegungsachse L verlaufen, sowie die größer dimensionierten und im Wesentlichen geradlinig verlaufenden, ebenfalls einander gegenüberliegenden Außenflächen 306. Letztere verbinden die gerundeten Randbereiche 304 miteinander und weisen größere Flächen auf. Da somit zwei paarweise aufeinander zulaufende bzw. sich verjüngende Seitenbereiche existieren, kann von einer Form nach Art eines Doppelkonus und/oder einer pyramidenartigen Form des Lagerabschnitts 32 gesprochen werden. Lediglich beispielhaft sind ferner Winkelabschnitte 308 gezeigt, die ein Anbinden des Lagerabschnitts 32 an das Trägerelement 34 aus Fig. 2 ermöglichen.

Die Form des Lagerabschnitts 32 kann auch wie folgt beschrieben werden: In der beschriebenen Querschnittsfläche definieren beide der Endbereiche 304 jeweils Halbkreisformen. Entlang der Verschiebungsachse L hin zum hinteren Ende 302 des Lagerabschnitts 32 weitet sich deren Radius kontinuierlich auf. Ein beispielhafter Radius RR ist in Fig. 4 für den linken Randbereich 304 eingetragen. Weiter wird die Form des Lagerabschnitts 32 dadurch bestimmt, dass in der vorstehend erläuterten Bewegungsebene die Endbereiche 304 in einem Winkel zueinander verlaufen. Anders ausgedrückt ist der Lagerabschnitt 32 in der entsprechenden Draufsicht keilförmig geformt. Diese Keilform führt zusammen mit der Zunahme des Radius RR, der z.B. die Abmessung in Y kontinuierlich vergrößert, zu einer Doppelkonus-Form des Lagerabschnitts 32.

Als ein weiteres Merkmal des Lagerabschnitts 32 erkennt man eine Mehrzahl von Führungsvorsprüngen in Form von Führungsrippen 320. Diese sind an drei unterschiedlichen Seiten positioniert, nämlich an den Randbereichen 304 sowie der nach oben bzw. außen weisende Außenfläche 306. Eine äußerste Kante dieser Führungsrippen 320 verläuft geradlinig und parallel zur Verschiebungsachse L. Sie folgt daher nicht der Außenkontur des Lagerabschnitts 32 und bildet nicht dessen Doppelkonus-Form ab. An dem dem Betrachter zugewandten vorderen Ende des Lagerabschnitts 32 weisen die Führungsrippen 320 jeweils mit Radien versehene bzw. gerundete Kanten 321 auf. Allgemein erstrecken sich die Führungsrippen 320 entlang der Verschiebungsachse L und sind geradlinig ausgebildet.

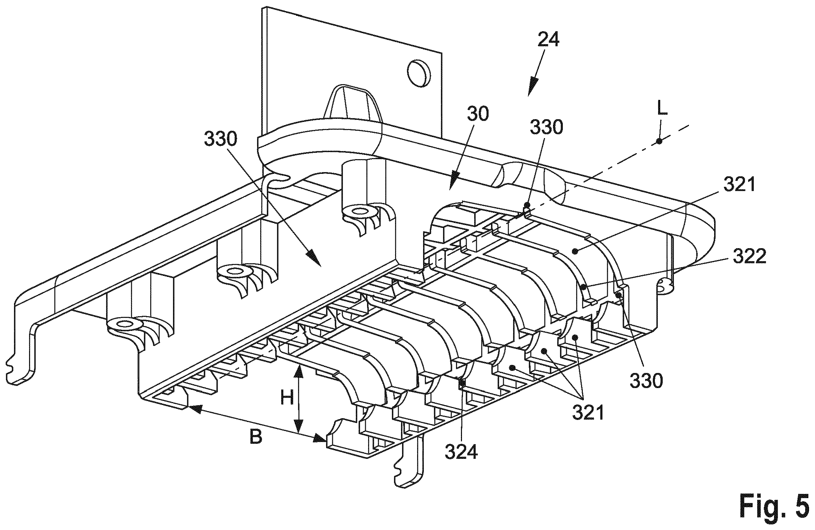

In Fig. 5 ist eine Ansicht auf die erste Teilanordnung 24 gezeigt und genauer gesagt auf eine Unterseite des Führungsabschnitts 30. Dieser definiert allgemein eine Ausnehmung bzw. einen Aufnahmebereich, in dem der Lagerabschnitt 32 aufnehmbar und insbesondere verschiebbar gelagert ist. Lediglich beispielhaft wird dieser Aufnahmebereich durch mehrere einzelne Rippen 321 begrenzt, von denen nur einzelne mit einem entsprechenden Bezugszeichen versehen sind. Einzelne der Rippen 321 weisen einen oberen Radius 322 auf, der eine Position des Lagerabschnitts 32 in vertikaler Richtung nach oben begrenzt. Andere der Rippen 321 weisen einen unteren Radius 324 auf, der eine vertikale Position des Lagerabschnitts 32 nach unten begrenzt. Hierdurch wird eine Funktionstrennung ermöglicht und das Risiko von Doppelpassung reduziert.

Gezeigt sind ferner Führungsnute 330. Diese erstrecken sich entlang der Verschiebungsachse L sowie durch die einzelnen Rippen 321 hindurch. Die Führungsnute 330 definieren somit aneinander gereihte Durchbrechungen der Rippen 321. Allgemein sind die Führungsnute 330 dazu eingerichtet, die Führungsrippen 320 des Lagerabschnitts 32 aufzunehmen, um sie bei einem Verschieben entlang der Verschiebungsachse L zu führen. Die Führungsrippen 320 und die Führungsnute 330 bilden somit eine Eingriffsstruktur zwischen erster und zweiter Teilanordnung 24, 26. Wie in Fig. 5 gezeigt, versteht es sich dabei, dass die Führungsnute an zu den Führungsrippen 320 korrespondierenden Positionen angeordnet sind, wobei eine der Führungsnute 330 in Fig. 5 nicht einsehbar ist.

Jeweils einander gegenüberliegende Abschnitte einer oder auch benachbarter Rippen 321 definieren eingetragene Breite B und Höhe H des Aufnahmebereichs 30. Die Breite B und Höhe H erstrecken sich dabei entlang der X- und Y-Achse aus Fig. 4 (die Breite B entlang der X-Achse und die Höhe H entlang der Y-Achse). Entlang der linearen Verschiebungsachse L betrachtet (und entgegen der Fahrtrichtung F) weitet sich eine Querschnittsfläche der von dem Führungsabschnitt 30 definierten Ausnehmung analog zur Querschnittsfläche des Lagerabschnitts 32 kontinuierlich auf. Dies erfolgt durch eine entsprechende Vergrößerung der Breiten- und Höhenabmessung B, H (siehe entsprechend veränderliche Positionierungen der Radien 322, 324 entlang der Verschiebungsachse L). Bei einer Verschiebung des Lagerabschnitts entlang der Achse L und entgegen der Fahrtrichtung F wird diese dadurch seitlich linear geführt, was zusätzlich durch die geschilderte optionale Eingriffsstruktur verbessert wird.

Bei einer entgegengesetzten Verlagerung zurück in die Ausgangsstellung (d.h. in die Fahrtrichtung F) wirken die sich dann verkleinernden Querschnittsflächen der Ausnehmung 30 und des Lagerabschnitts 32 zentrierend zusammen, sodass der Sensor 18 wieder definiert relativ zum Querträger 16 und/oder allgemein im Fahrzeug 10 positioniert wird. Er muss dann trotz einer zumindest temporären Positionsänderung nicht neu eingemessen werden oder aber der Einmessaufwand verringert sich zumindest deutlich.

Ein entsprechender Zustand, in dem der Sensor 18 aus seiner Ausgangsstellung gemäß Fig. 3 gedrängt wurde, ist in Fig. 6 gezeigt. Man erkennt, dass der Lagerabschnitt 32 zu großen Teilen und sogar mehr als der Hälfte aus dem Führungsabschnitt 30 ausgerückt ist und deutlich gegenüber dem Anschlagbereich 31 verschoben ist. Ein Abstand des Sensors 18 gegenüber dem Stoßfängerquerträger 16 und genauer gesagt einer Vorderkante hiervon hat sich deutlich verringert und sogar ein negatives Vorzeichen eingenommen (siehe entsprechender Abstand A1). Aufgrund des Zusammenwirkens von Führungsabschnitt 30 und Lagerabschnitt 32 ist die Verlagerungsbewegung entlang einer definierten linearen Verlagerungsachse, nämlich der Achse L, erfolgt. Die Führung wird durch die umrissen hervorgehobene Eingriffsstruktur 320, 330 unterstützt. Da dabei auch die Rückstellelemente 27 der Fig. 2 elastisch deformiert wurden, kann bei einer Rücknahme der von außen einwirkenden Kräfte umgehend eine Rückstellbewegung mittels der entsprechenden Rückstellkräfte R der zweiten Teilanordnung 26 in die Ausgangsstellung aus Fig. 3 erzielt werden.

Es kann also im Kollisionsfall definiert ausgewichen werden, was ein Beschädigungsrisiko des Sensors 18 aber auch ein Verletzungsrisiko von Kollisionspartnern mindert. Es kann aber nach Beendigung der Kollision selbsttätig in eine gewünschte Ausgangsstellung lagepräzise zurückgekehrt werden, sodass der Sensor 18 dann unter Umständen ohne erforderliche Wartungs- oder Reparaturarbeiten weiter betrieben werden kann.

Wie im allgemeinen Beschreibungsteil erwähnt, sind Vorteile aber auch bereits dann erzielbar, wenn ohne das Erzeugen von Rückstellkräften R die Verlagerbarkeit des Sensors 18 entlang einer bevorzugt einzigen linearen Verlagerungsachse L bereitgestellt wird. Dies geschieht im vorliegenden Beispiel aufgrund der geschilderten Formen und Abmessungen und das damit einhergehende Zusammenspiel von Führungsabschnitt 30 und Lagerabschnitt 32.

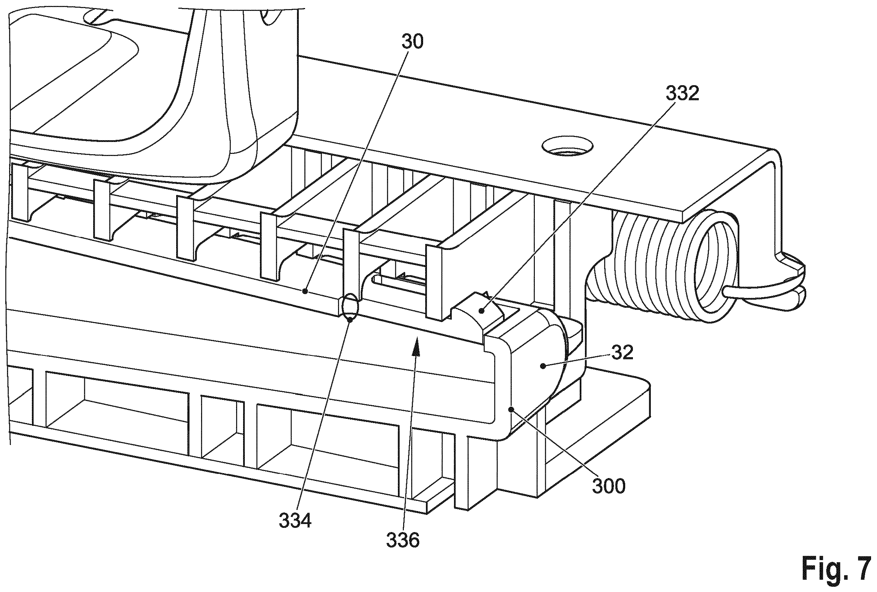

In Figur 7 ist eine Detail-Schnittansicht einer Halterung 12 gemäß einem weiteren Ausführungsbeispiel gezeigt. Die Schnittebene entspricht dabei derjenigen aus z.B. Fig. 3, die Blickrichtung ist jedoch spiegelverkehrt auf das vordere Ende 300 des Lagerabschnitts 32 gerichtet.

Als Erweiterung gegenüber den vorherigen Ausführungsbeispielen ist bei dieser Variante vorgesehen, dass der Lagerabschnitt 32 und der Führungsabschnitt 30 über eine Eigriffstruktur mit wenigstens einem Rasthaken 332 in der abgebildeten Ausgangsstellung aneinander gehalten werden. Der Rasthaken 332 ist über ein Gelenk 334 (im gezeigten Fall ein Festkörpergelenk) mit dem Lagerabschnitt 30 verbunden. Er kann in einen Hohlraum 336 im Innern des Lagerabschnitts 32 einfedern, wenn er sich von dem Führungsabschnitt 30 löst.

Hierdurch wird ein sicherer und möglichst vibrationsfreier Halt und somit eine entsprechend zuverlässige Sensorpositionierung in der Ausgangsstellung ermöglicht. Auch wird das Risiko an sich nicht erforderlicher Verschiebungen des Sensors 18 reduziert (z.B. bei eigentlicher Kollisionsfreiheit), da aufgrund der formschlüssigen Rastverbindung zunächst eine erhöhte Grenzkraft sprungartig Überwunden werden muss, um den Sensor 18 zu verlagern.

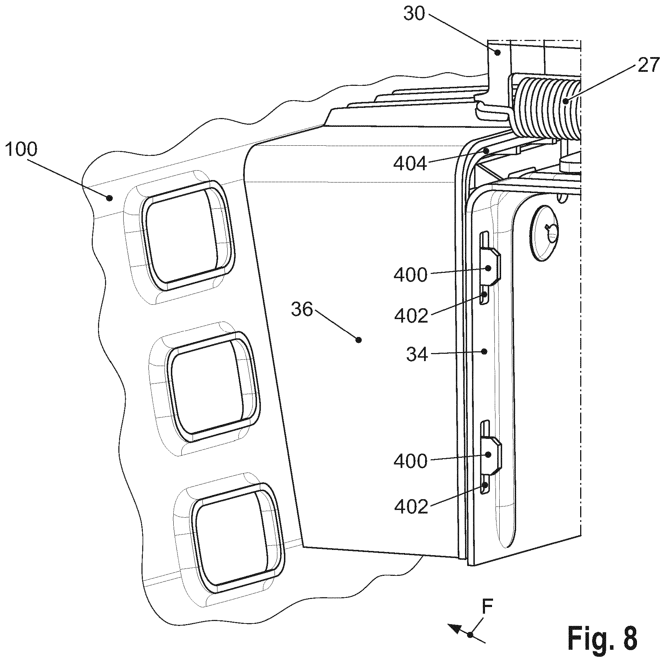

Figur 8 zeigt die Teilanordnung 26 in einer von den vorstehenden Darstellungen abweichenden Ausführung, bei der der Anschlagrahmen 36 integraler oder montierter Bestandteil des Kühlerschutzgitters 100 ist. Die Blickrichtung entspricht dabei einer Sicht von schräg hinten auf das Kühlerschutzgitter 100 in die Fahrtrichtung F. Der Anschlagrahmen 36 greift bevorzugt über Führungszapfen 400 in Ausnehmungen in Form von Langlöchern 402 in das Trägerbauteil 34 der Teilanordnung 26 ein. Dabei erfolgt bevorzugt ein Toleranzausgleich in allen Achsrichtungen durch den seitlichen und vertikalen Abstand der Führungszapfen 400 am Anschlagrahmen 36 zu den Flanken der Langlöcher 402 im Trägerteil 34 sowie durch den Abstand der Hinterkante 404 des Anschlagrahmens 36 zum Trägerteil 34.

In sämtlichen Ausführungsbeispielen (aber auch unabhängig hiervon als ein allgemeiner Aspekt der Erfindung) kann eine Reinigungseinrichtung zum Erzeugen eines auf den Sensor 18 gerichteten Fluidstrahls vorgesehen sein. Hierdurch können Verschmutzungen von der Sensoroberfläche entfernt werden. Der Fluidstrahl kann zum Beispiel ein Luft- oder Flüssigkeitsstrahl sein.

### Bezugszeichenliste

- 10: Fahrzeug
- 12: (Sensor-)Halterung
- 16: Stoßfängerquerträger
- 18: Sensor
- 22: Aufnahmebereich
- 24: erste Teilanordnung
- 26: zweite Teilanordnung
- 27: Rückstellelement
- 28: Kopplungselement
- 30: Führungsabschnitt
- 31: Anschlagbereich
- 32: Lagerabschnitt
- 34: Trägerbauteil
- 36: Anschlagrahmen
- 100: Kühlerschutzgitter
- 102: Öffnung
- 300: vorderes Ende
- 302: hinteres Ende
- 304: gekrümmte Randbereiche
- 306: gegenüberliegende Flächen
- 308: Winkelabschnitt
- 320: Führungsrippe
- 321: Rippe
- 322: oberer Radius
- 323: Kante
- 324: unterer Radius
- 330: Führungsnut
- 332: Rasthaken
- 334: Gelenk
- 400: Führungszapfen
- 402: Langloch
- 404: Hinterkante
- A0, A1: Abstand
- L: lineare Verlagerungsachse
- B: Breite
- H: Höhe
- F: (Vorwärts-) Fahrtrichtung

## Patentansprüche

1. Halterung (12) für einen Sensor (18) an einer Fahrzeugstruktur (16),
mit:
- einer ersten Teilanordnung (24), die an der Fahrzeugstruktur (16) befestigbar ist;
- einer zweiten Teilanordnung (26), an der der Sensor (18) befestigbar ist; und
- wenigstens einem Rückstellelement (27);
wobei die erste und zweite Teilanordnung (24, 26) relativ zueinander beweglich sind und das Rückstellelement (27) dazu eingerichtet ist, nach Maßgabe der Relativbewegung Rückstellkräfte (R) auf die zweite Teilanordnung (26) auszuüben, um diese in eine Ausgangsstellung zu drängen, wobei die erste und zweite Teilanordnung (24, 26) relativ zueinander linear verschiebbar sind, wobei die erste Teilanordnung (24) einen Führungsabschnitt (30) umfasst, an oder in dem die zweite Teilanordnung (26) beweglich geführt ist, wobei der Führungsabschnitt (30) einen Lagerabschnitt (32) der zweiten Teilanordnung (26) aufnimmt und diesen zumindest abschnittsweise umgibt,
**dadurch gekennzeichnet, dass**
der Lagerabschnitt (32) entlang einer Verschiebungsachse (L) aus der Ausgangsstellung relativ zu dem Führungsabschnitt (30) verschiebbar ist, wobei eine Querschnittsfläche des Lagerabschnitts (32) entlang der Verschiebungsachse (L) zumindest abschnittsweise zunimmt.

2. Halterung (12) nach Anspruch 1,
**dadurch gekennzeichnet, dass** sich der Lagerabschnitt (32) in Richtung der Ausgangsstellung betrachtet zumindest abschnittsweise verjüngt und/oder dass der Lagerabschnitt (32) keilförmig ausgebildet ist.

3. Halterung (12) nach einem der Ansprüche 1 oder 2,
**gekennzeichnet durch** wenigstens eine sich entlang der Verschiebungsachse (L) erstreckende Eingriffsstruktur (320, 330) zwischen dem Führungsabschnitt (30) und dem Lagerabschnitt (32).

4. Halterung (12) nach einem der vorangehenden Ansprüche,
**dadurch gekennzeichnet, dass** das Rückstellelement (27) eine Zugfeder ist.

5. Halterung (12) für einen Sensor (18) an einer Fahrzeugstruktur (16), mit:
- einer ersten Teilanordnung (24), die an der Fahrzeugstruktur (16) befestigbar ist und die einen Führungsabschnitt (30) umfasst;
- einer zweiten Teilanordnung (26), an der der Sensor (18) befestigbar ist und die einen Lagerabschnitt (32) umfasst, der an oder in dem Führungsabschnitt (30) beweglich geführt ist;
**dadurch gekennzeichnet, dass** der Lagerabschnitt (32) aus einer Ausgangsstellung relativ zu dem Führungsabschnitt (30) entlang einer Verschiebungsachse (L) verschiebbar ist, wobei eine Querschnittsfläche des Lagerabschnitts (30) entlang der Verschiebungsachse (L) zumindest abschnittsweise zunimmt.

6. Fahrzeug (10),
umfassend eine Halterung (12) nach einem der vorangehenden Ansprüche, insbesondere wobei die Fahrzeugstruktur ein Stoßfängerquerträger (16) ist und/oder wobei der Sensor (18) ein Radarsensor ist.

## Claims

1. Mount (12) for a sensor (18) on a vehicle structure (16),
the mount comprising:
- a first subassembly (24) which can be attached to the vehicle structure (16);
- a second subassembly (26) to which the sensor (18) can be attached; and
- at least one return element (27);
wherein the first and second subassemblies (24, 26) are movable relative to one another and the return element (27) is configured to exert restoring forces (R) on the second subassembly (26) in accordance with the relative movement in order to force the latter into a starting position, wherein the first and second subassemblies (24, 26) are linearly displaceable relative to one another, wherein the first subassembly (24) comprises a guide portion (30) on or in which the second subassembly (26) is movably guided, wherein the guide portion (30) receives a bearing portion (32) of the second subassembly (26) and surrounds it at least in portions, **characterized in that**
the bearing portion (32) is displaceable from the starting position relative to the guide portion (30) along a displacement axis (L), wherein a cross-sectional area of the bearing portion (32) increases at least in portions along the displacement axis (L).

2. Mount (12) according to claim 1,
**characterized in that** the bearing portion (32) tapers at least in portions when viewed in the direction of the starting position and/or **in that** the bearing portion (32) is wedge shaped.

3. Mount (12) according to either claim 1 or claim 2,
**characterized by** at least one engagement structure (320, 330) extending along the displacement axis (L) between the guide portion (30) and the bearing portion (32).

4. Mount (12) according to any of the preceding claims,
**characterized in that** the return element (27) is a tension spring.

5. Mount (12) for a sensor (18) on a vehicle structure (16), comprising:
- a first subassembly (24) which can be attached to the vehicle structure (16) and which comprises a guide portion (30);
- a second subassembly (26) to which the sensor (18) can be attached and which comprises a bearing portion (32) which is movably guided on or in the guide portion (30);
**characterized in that**
the bearing portion (32) is displaceable from a starting position relative to the guide portion (30) along a displacement axis (L), wherein a cross-sectional area of the bearing portion (30) increases at least in portions along the displacement axis (L).

6. Vehicle (10),
comprising a mount (12) according to any of the preceding claims, in particular wherein the vehicle structure is a bumper cross member (16) and/or wherein the sensor (18) is a radar sensor.

## Revendications

1. Dispositif de maintien (12) pour un capteur (18) sur une structure de véhicule (16),
comportant :
- un premier système partiel (24) pouvant être fixé à la structure de véhicule (16) ;
- un second système partiel (26) auquel le capteur (18) peut être fixé ; et
- au moins un élément de rappel (27) ;
dans lequel le premier et le second système partiel (24, 26) sont mobiles l'un par rapport à l'autre et l'élément de rappel (27) est conçu pour exercer des forces de rappel (R) sur le second système partiel (26) en fonction du mouvement relatif afin de pousser celui-ci dans une position initiale, dans lequel le premier et le second système partiel (24, 26) peuvent être coulissés linéairement l'un par rapport à l'autre, dans lequel le premier système partiel (24) comprend une section de guidage (30) sur ou dans laquelle le second système partiel (26) est guidé de manière mobile, dans lequel la section de guidage (30) reçoit une section formant palier (32) du second système partiel (26) et entoure celle-ci au moins dans certaines sections, **caractérisé en ce que**
la section formant palier (32) peut être coulissée le long d'un axe de coulissement (L) à partir de la position initiale par rapport à la section de guidage (30), dans lequel une surface de section transversale de la section formant palier (32) va en augmentant au moins dans certaines sections le long de l'axe de coulissement (L).

2. Dispositif de maintien (12) selon la revendication 1,
**caractérisé en ce que** la section formant palier (32), vue en direction de la position initiale, se rétrécit au moins dans certaines sections **et/ou en ce que** la section formant palier (32) est réalisée de manière cunéiforme.

3. Dispositif de maintien (12) selon l'une des revendications 1 ou 2,
**caractérisé par** au moins une structure de mise en prise (320, 330) s'étendant le long de l'axe de coulissement (L) entre la section de guidage (30) et la section formant palier (32).

4. Dispositif de maintien (12) selon l'une des revendications précédentes,
**caractérisé en ce que** l'élément de rappel (27) est un ressort de traction.

5. Dispositif de maintien (12) pour un capteur (18) sur une structure de véhicule (16), comportant :
- un premier système partiel (24) pouvant être fixé à la structure de véhicule (16) et comprenant une section de guidage (30) ;
- un second système partiel (26) auquel le capteur (18) peut être fixé et comprenant une section formant palier (32) qui est guidée de manière mobile sur ou dans la section de guidage (30) ;
**caractérisé en ce que**
la section formant palier (32) peut être coulissée le long d'un axe de coulissement (L) à partir d'une position initiale par rapport à la section de guidage (30), dans lequel une surface de section transversale de la section formant palier (30) va en augmentant au moins dans certaines sections le long de l'axe de coulissement (L).

6. Véhicule (10),
comprenant un dispositif de maintien (12) selon l'une des revendications précédentes, en particulier dans lequel la structure de véhicule est une traverse de pare-chocs (16) et/ou dans lequel le capteur (18) est un capteur radar.
